Europäisches Patentamt

European Patent Office

Office européen des brevets

(11) Publication number: **0 376 812**
**A2**

(12) **EUROPEAN PATENT APPLICATION**

(21) Application number: **89403597.1**

(51) Int. Cl.⁵: **G03B 17/24**

(22) Date of filing: **21.12.89**

(30) Priority: **30.12.88 US 292474**

(43) Date of publication of application:
**04.07.90 Bulletin 90/27**

(84) Designated Contracting States:
**DE FR GB IT SE**

(71) Applicant: **Stettner, William**
**118 East 25th Street**
**New York New York 10010(US)**

(72) Inventor: **Stettner, William**
**118 East 25th Street**
**New York New York 10010(US)**

(74) Representative: **Bloch, Gérard et al**
**2, square de l'Avenue du Bois**
**F-75116 Paris(FR)**

(54) **Information means for cameras and slide mounts for film containing such information.**

(57) An improvement has been developed for use in 120mm roll film cameras and 35mm cameras which provides for the placement of information (15) just outside the normal image area but along the boarder thereof. A similar improvement has been developed for cameras which use single sheet film which allows the placement of information along the outer edge of the image area but within the normal image area. The invention also includes 35mm slide mounts which are constructed to be utilized with 35mm slides which contain the information placed just outside the image area.

FIG. 1

## INFORMATION MEANS FOR CAMERAS AND SLIDE MOUNTS FOR FILM CONTAINING SUCH INFORMA-TION

The present specification is concerned with improvements in cameras, film holders and slide mounts which enables information to be displayed on the film after a picture has been taken.

Various ways of recording data on camera film are known in the art. United States Reissue Patent Re. 30,258 describes a data recording camera whereby information which it is desired to be retained in connection with the photographic images is recorded within the image area.

U.S. Patent No. 3,552,283 describes cameras having a cartridge type film arrangement wherein the developed film contains an arrow-like imprint on the periphery of the film frame for the purpose of orienting the film or slide produced therefrom.

U.S. Patent No. 4,361,388 describes a digital marking attachment for cameras.

U.S. Patent No. 4,678,301 describes an apparatus for the marking of film at various positions along its periphery.

Cameras which use single sheet film are well known. So called 2-1/4 film cameras and their structures are well known by those skilled in the art. Similarly, 35mm single lens reflex cameras are well known. The structure by which such film is moved across the lens area, and exposed, is well known by those skilled in the art. Similarly, single sheet film holders are well known to those working in this art area as are slide holders particularly for cut film. (4x5-8x10)

My invention resides in an improvement in cameras which use 120mm roll film which comprises a roll film back having a notch which is along the outer border of the normal image area of the film, but outside the normal image area of the film, and means for removably securing in the notch information which will appear on the film outside the normal image area but on one outer border area thereof during exposure of the film when a picture is being taken. The means for removably securing the information in the notch can be any suitable means such as a C-shaped member which can have a protuberance along one edge and may, if desired, contain a groove against which the information is aligned. The means can also include a two sided adhesive strip for securing the member in the notch.

According to a further embodiment of my invention, I have developed an improvement in 35mm cameras which comprises the image frame having a notch along one section of the outer border of the normal image area of the film, but outside the normal image area of the film, the notch being between adjacent frames on the film as the film passes over the frame, and means for removably securing in the notch information which will appear on each frame of film outside the normal image area but on one outer border area thereof during exposure of the film when a picture is taken. The image frame may have means for aligning the information such as for example, alignment markers which are placed adjacent the notch. If desired, the information may contain corresponding alignment markers to facilitate alignment of the information in the notch. The information may be secured in the notch by any suitable means including double sided adhesive. According to one embodiment of my invention, the information is contained on a clearl film.

According to a further embodiment of my invention, I have developed an improvement in cameras which use single sheet film which comprises a single sheet film holder having two sides each of which have a movable flap which has along one edge of the flap which lies adjacent to the film surface when in place with the film contained in the holder, information which is desired to be placed on the film during the exposure of the film when a picture is taken so that the information appears within the normal image area along side the film's code notching.

According to a further embodiment of my invention, I have developed an improvement in 35mm slide mounts which comprises notching both sides of the slide mount along the outer periphery of the normal image area but outside the normal image area to mate with each other when they are folded with the slide therebetween so that in said position they will mate with the location of information shown on the periphery of the normal image area of the slide which information is outside the normal image area but on one outer border area thereof, whereby when the slide is viewed or projected when in the mount, the information will be visible along the outer periphery of the normal image area but outside the normal image area of the slide.

My invention is particularly useful for photographers who wish to put copyright notices or other identification just outside the normal image area of their pictures. However, my invention is equally applicable to the placement of other types of information.

My invention may be more fully appreciated by those skilled in the art by reference to the drawings wherein:

Fig. 1 shows a camera box with an information notch according to my invention and a clip holding information to be inserted into the notch;

Fig. 2 shows a roll film back having the improvement according to my invention together with the associated film insert;

Fig. 3 shows means for securing information into the notch which in this figure is a C-shaped member;

Fig. 4 shows the C-shaped member of Fig. 3 having a protuberance and a groove for aligning the information;

Fig. 5 is a view of the C-shaped member having a copyright notice.

Fig. 6 shows an image frame of a 35mm camera having my invention;

Fig. 7 shows information having alignment markers thereon and for insertion in the notch of the image frame of Fig. 6;

Fig. 8 shows the image frame with the information in place;

Fig. 9 shows a film holder with a flap according to my invention; and

Fig. 10 shows a 35mm slide mount according to my invention.

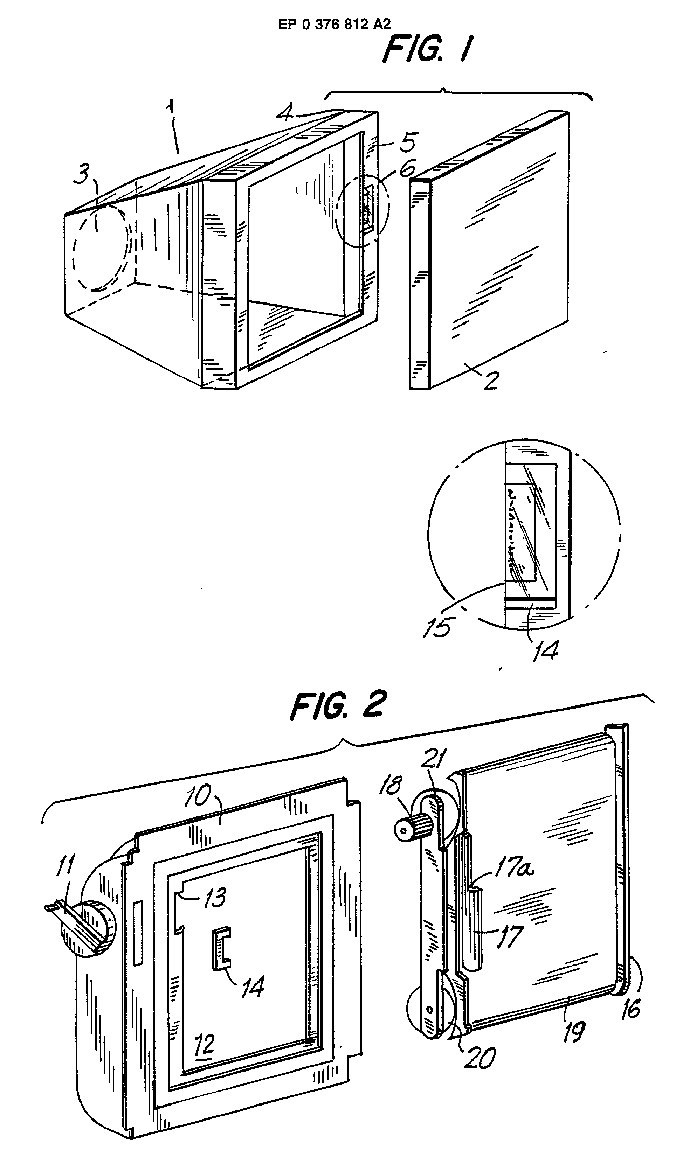

Referring to the drawings, Fig. 1 shows a schematic of a camera box 1 having a camera back 2, lens 3, film plane 4, negative masking frame 5 and an information receiving notch 6 according to my invention. Means for securing the information is shown at 14 and information such as a copyright notice is shown as 15.

Fig. 2 shows a roll film back 10 having film advance knob 11, an image frame 12, an information notch according to my invention 13 and means for securing information in the notch 14. Film insert 16 has film clip 17 with a cut away 17a so that upon insertion into roll film back 10 clip 17 will not interfere with notch 13 or means 14. Gear 18 mates with advance knob 11 for advancing film 19 which is shown beneath film clip 17 which film is fed from film feed spool 20 onto the film take up spool 21.

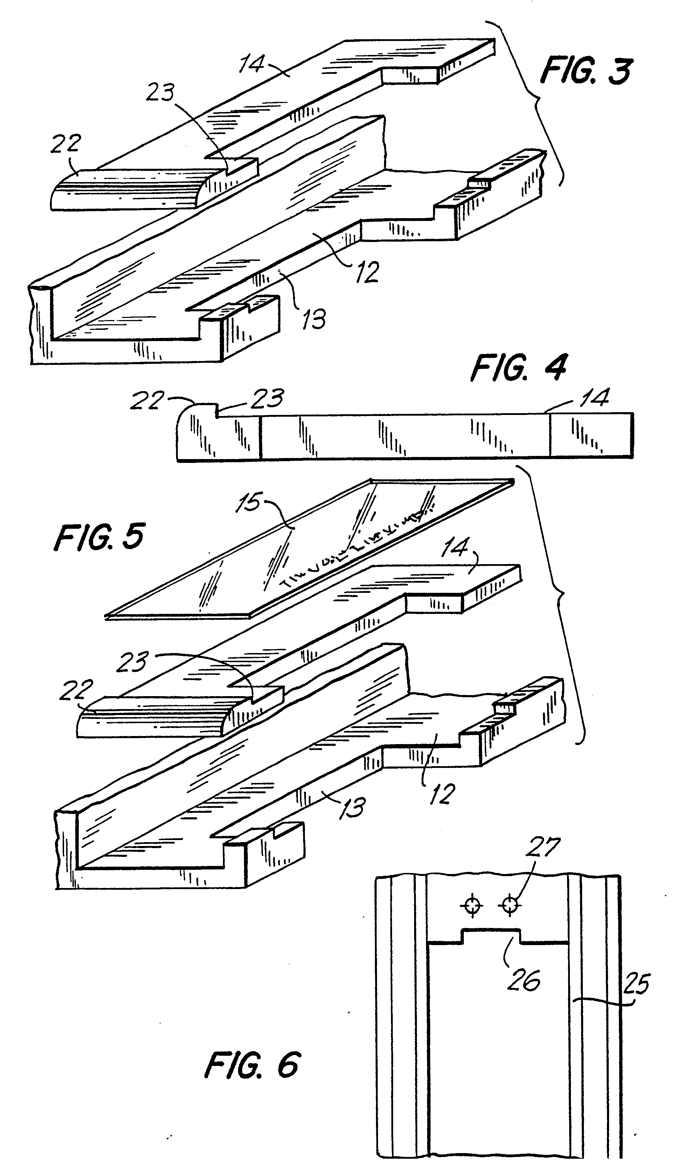

Figs. 3 and 4 show one suitable means for securing the information into the notch according to my invention. A C-shaped member 14 is inserted into frame 12 having notch 13. C-shaped member 14 can have protuberance 22 which is advantageous for preventing the film catching on the member 14 and a groove 23 may be provided for alignment of information 15 on the C-shaped member.

Fig. 5 shows C-shaped member 14 having protuberance 22 and groove 23 and information 15 -a copyright notice- to be secured thereon; the member 14 being secured and aligned in notch 13 of frame 12.

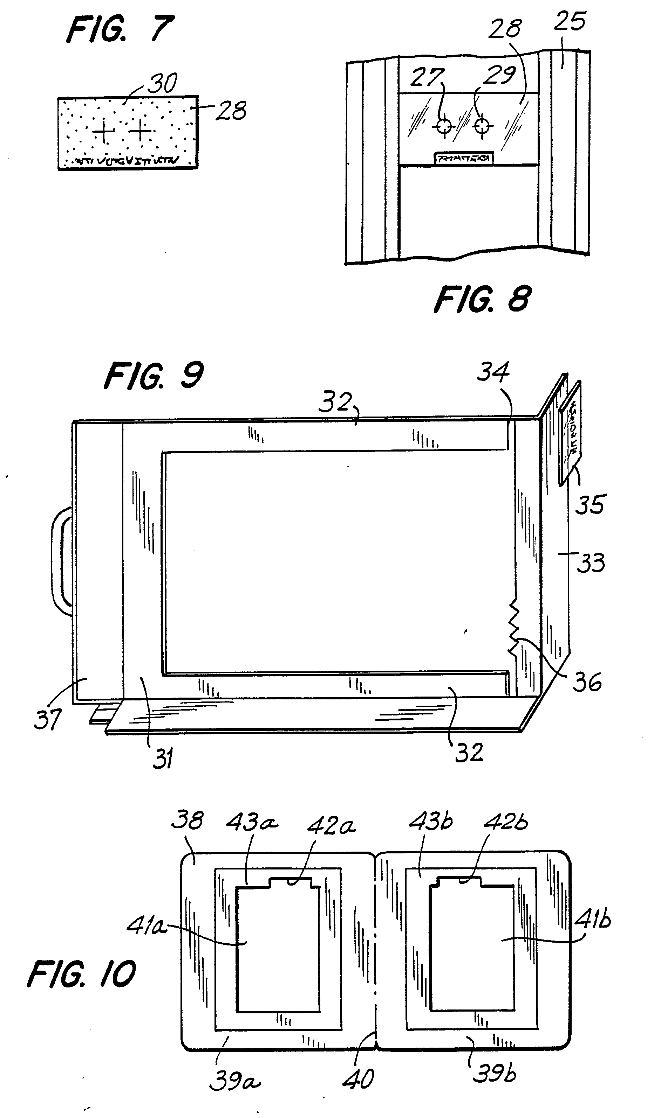

Fig. 6 shows my invention as applied to a 35mm camera. Image frame 25 in a 35mm camera has a notch 26 positioned so that it will be between adjacent film frames as film is fed through the camera. Notch 26 may, if desired, have aligning means such as markers 27. If desired, information 28 may have corresponding alignment markers 29 so that when information 28 is inserted into notch 26 markers 29 may be aligned with markers 27 so that the information is aligned in the notch as shown in Fig. 8 and secured such as by adhesive 30.

Fig. 9 shows a film holder according to my invention 31 having a film tracks 32, a pair of flaps, one of which 33 is shown and the other of which is on the opposite under side. The film holder has recesses 34 so that when each flap is in place resting adjacent the film, information 35 will be disposed adjacent coding notch 36. Also shown is dark slide 37.

Fig. 10 shows a 35mm slide mount 38 which comprises two sides 39a and 39b. The slide mount contains a fold line so that in use a 35mm slide is placed within one holder portion, 43a and 43b, when the slide holder is folded along fold line 40 and the slide is then visible through image areas 41a and 41b as shown in Fig. 10. Each of the image areas have a mating notch 42a and 42b so that when the slide mount is folded with the slide therebetween and the slide is viewed or projected information will be visible along the outer periphery of the normal image area but outside the normal image area of the slide.

Other and further uses of my invention will be more fully appreciated by those skilled in the art by reference to the foregoing description and the claims set forth hereinafter.

**Claims**

1. In a camera which uses 120mm roll film, the improvement which comprises a roll film back (10) having a notch (13) which is along the outer boarder of the normal image area of the film (19), but outside the normal image area of the film (19), and means (14) for removably securing in the notch (13) information (15) which will appear on the film (19) outside the normal image area but on one outer boarder area thereof during exposure of the film (19) when a picture is being taken.

2. The improvement according to claim 1 wherein the means comprises a C-shaped member (14) having a protuberance (22) along one edge thereof.

3. The improvement according to claim 2 wherein the protuberance (22) contains a grove (23) against which the information (15) is aligned.

4. In a 35mm camera, the improvement which comprises an image frame (25) having a notch (26) along one section of the outer boarder of the normal image area of the film, but outside the normal image area of the film, the notch (26) being between adjacent frames on the film as the film passes over the frame (25), and means (30) for removably securing in the notch (26) information (28) which will appear on each frame of film outside the normal image area but on one outer boarder area thereof during exposure of the film when a picture is taken.

5. The improvement according to claim 4 wherein the image (25) frame has means (27) for aligning the information.

6. The improvement according to claim 4 wherein the image frame (25) has alignment markers (27) adjacent the notch (26) and the information (28) has corresponding alignment markers (29) to facilitate the alignment of the information (28) in the notch (26).

7. In a camera which uses single sheet film, the improvement which comprises a single sheet film holder having two sides each of which has a movable flap (33) which has along one edge of the flap (33) which lies adjacent to the film surface when in place with the film contained in the holder, information (35) which is desired to be placed on the film during the exposure of the film when a picture is taken so that the information appears within the normal image area along side the film's code notching (36).

8. In a mount (38) for 35mm slides, the improvement which comprises notching (42a,42b) both sides (39a,39b) of the slide mount (38) along the outer periphery of the normal image area but outside the normal image area to mate with each other when they are folded with the slide therebetween so that in said position they will mate with the location of information shown on the periphery of the normal image area of the slide which information is outside the normal image area but on one outer boarder area thereof, whereby when the slide is viewed or projected when in the mount, the information will be visible along the outer periphery of the normal image area but outside the normal image area of the slide.

**FIG. 1**

**FIG. 2**

FIG. 3

FIG. 4

FIG. 5

FIG. 6

**FIG. 7**

**FIG. 8**

**FIG. 9**

**FIG. 10**